# EUROPEAN PATENT APPLICATION

(11) **EP 4 219 061 A1**
(43) Date of publication of application: **02.08.2023**
(21) Application number: 23152862.1
(22) Date of filing: 23.01.2023
(51) Int. Cl.: B23K 26/03, B23K 26/70, B23K 37/00

(54) **A MACHINE FOR LASER PROCESSING AN OBJECT, A SAFETY DEVICE FOR A GUARD FOR PROTECTING A MACHINE FOR PROCESSING AND/OR SCANNING AN OBJECT AND A METHOD FOR VIEWING A WORK AREA IN A MACHINE FOR PROCESSING AND/OR LASER SCANNING AN OBJECT**

(30) Priority: 26.01.2022 IT 202200001337
(71) Applicant: Sisma S.p.A., 36013 Piovene Rocchette (Vicenza) (IT)
(72) Inventor: CAREGARO NEGRIN, Marco, 36013 PIOVENE ROCCHETTE (VICENZA) (IT)
(74) Representative: Anselmi, Davide

(57) **Abstract**

Machine (1) for laser processing an object comprising: a processing unit (2) defining a work area (A) adapted to house at least partially an object during a laser processing; a protective body (3), connected to the processing unit (2) and configured to protect a user, having an inner surface (4), at least partially facing the work area (A), and an outer surface (5), at least partially facing an environment outside the machine (1); at least one optical acquisition device (6) configured to acquire at least one image representative of the work area; and at least one display screen (8) connected to the outer surface (5) of the protective body (3) so as to make visible to a user the aforementioned at least one image during an operating condition of the machine (1).

## Description

The present invention relates to a machine for laser processing an object, a safety device for a guard for protecting a machine for processing and/or scanning an object and a method for viewing a work area in a machine for processing and/or laser scanning an object.

In particular, the present invention lies in the technical field of machinery for processing and/or scanning objects by laser.

Nowadays, this type of machinery consists of a main frame that defines the work area in which, for example, the object is processed and/or scanned and of a protective body (often also called guard) connected to the frame and reversibly movable by an operator between a closed position, in which it at least partially confines the work area so that the health of the operator is safeguarded from the possible presence of laser rays and/or radiations, and an open position, in which it allows access to the work area allowing an introduction and/or a removal of objects from and towards the work area. In order to allow constant control by the operator over the operation of the machine, the protective body is provided with a window through which the user can control the operation of the machine during the operating steps. Disadvantageously, the use of potentially harmful means for humans such as, for example, X rays or laser beams, have led to the need to employ specific windows capable of safeguarding the health of operators during the inspection steps through the window.

For example, the regulations in force regarding the protection of the operator during use of a machine for laser processing objects require that the windows of the aforementioned windows are increasingly thicker and that their area becomes increasingly narrow.

Disadvantageously, this entails an inevitable reduction in visibility for the operator and, thus, a reduction in the accuracy with which the operator can view the operation of the machine.

Disadvantageously, moreover, the protective bodies currently in circulation could become obsolete in the short term (for example as a result of an even more stringent safety regulation being introduced) and, therefore, result in the need for a replacement thereof implying additional costs that reduce the production efficiency of the plant.

In this context, the technical task underlying the present invention is to propose a machine for laser processing an object, a safety device for a guard for protecting a machine for processing and/or scanning an object and a method for viewing a work area in a machine for processing and/or laser scanning an object that overcome the aforementioned drawbacks of the prior art.

In particular, the object of the present invention is to provide a machine for laser processing an object, a safety device for a guard for protecting a machine for processing and/or scanning an object and a method for viewing a work area in a machine for processing and/or laser scanning an object which guarantee a high degree of safety for operators.

A further object of the present invention is to provide a machine for laser processing an object, a safety device for a guard for protecting a machine for processing and/or scanning an object and a method for viewing a work area in a machine for processing and/or laser scanning an object capable of ensuring high visibility of the work area to the operator.

A further object of the present invention is to provide a machine for laser processing an object, a safety device for a guard for protecting a machine for processing and/or scanning an object and a method for viewing a work area in a machine for processing and/or laser scanning an object having high operating flexibility.

The specified technical task and the specified purposes are substantially achieved by a machine for laser processing an object, a safety device for a guard for protecting a machine for processing and/or scanning an object and a method for viewing a work area in a machine for processing and/or laser scanning an object comprising the technical features set forth in one or more of the appended claims.

The dependent claims correspond to possible embodiments of the invention.

Further characteristics and advantages of the present invention will become more apparent from the indicative and thus non-limiting description of a preferred but non-exclusive embodiment of a machine for laser processing an object, a safety device for a guard for protecting a machine for processing and/or scanning an object and a method for viewing a work area in a machine for processing and/or laser scanning an object as illustrated in the accompanying drawings in which:

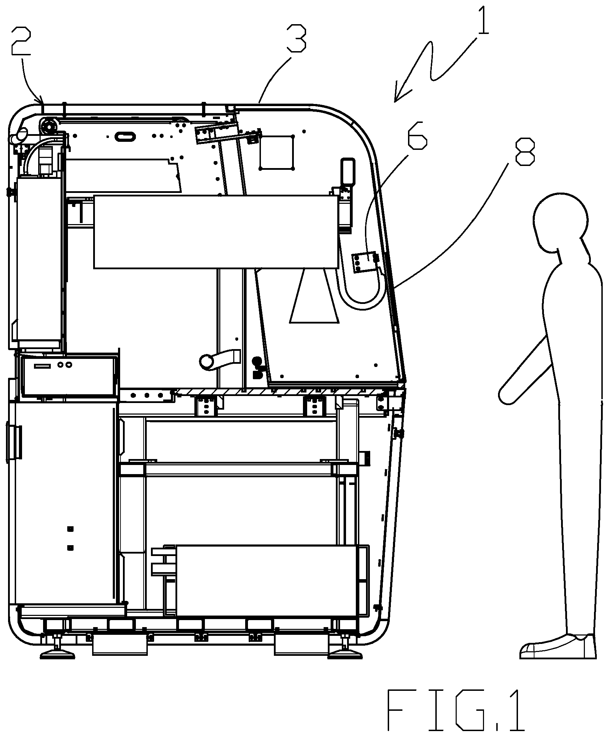

- figure 1 is a sectional view of a machine for laser processing an object in accordance with a possible embodiment of the present invention;

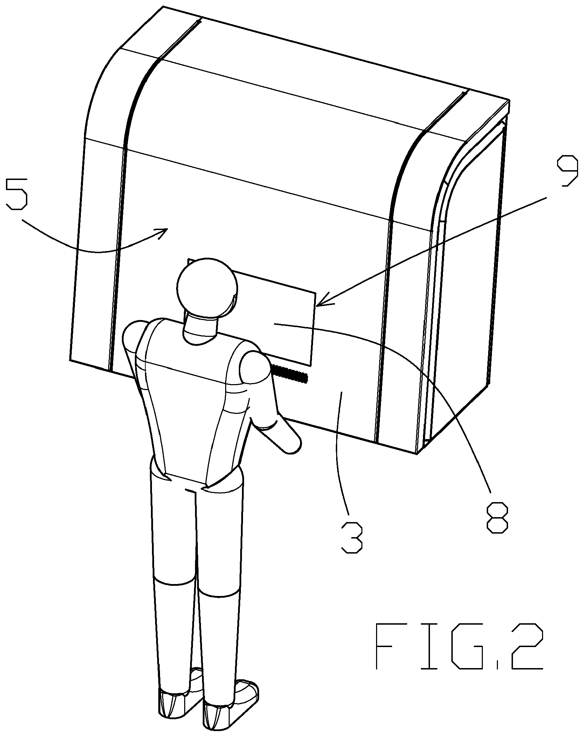

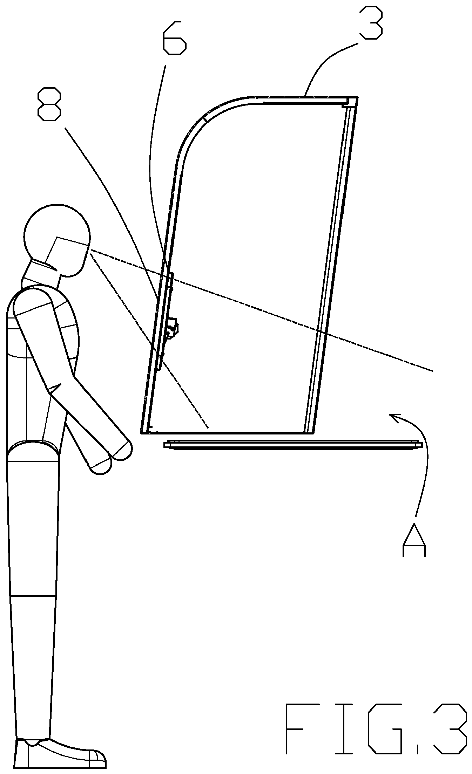

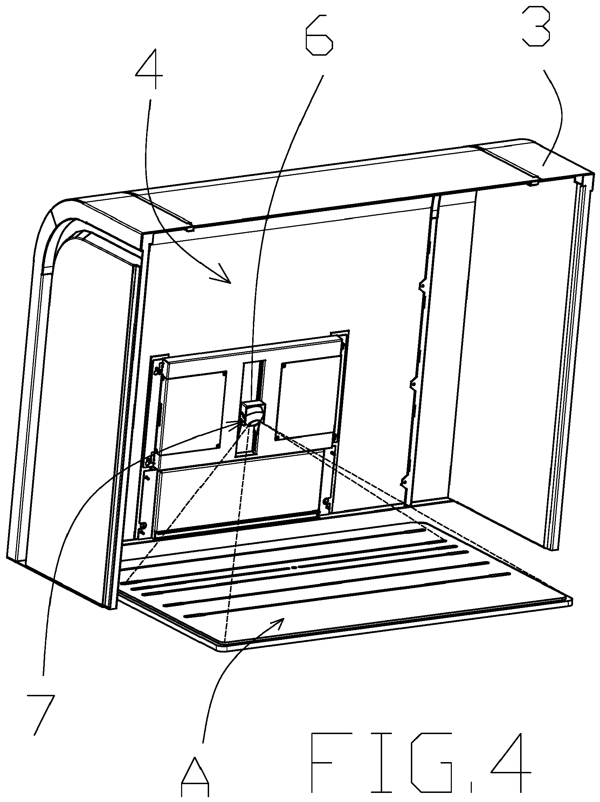

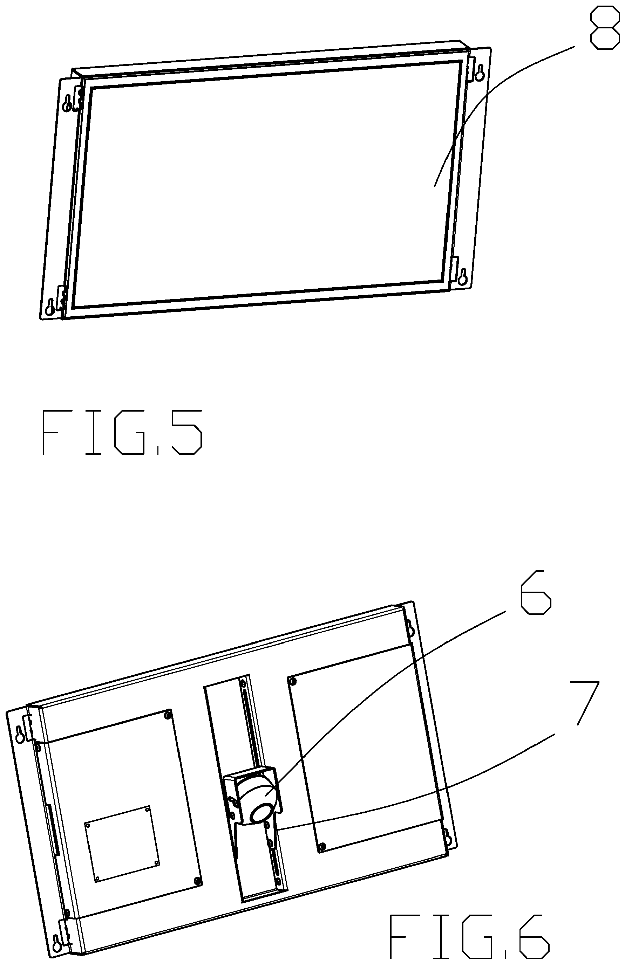

- figure 2-6 are different schematic representations of respective portions of the machine of figure 1.

With reference to the appended figure, a machine for laser processing an object has been indicated overall with the reference number 1, which will be reported below as machine 1 for simplicity of description.

The machine 1 for processing an object comprises a processing unit 2 defining a work area "A" adapted to house at least partially an object during a laser processing.

Furthermore, the machine 1 comprises a protective body 3 connected to the processing unit 2 and configured to protect an operator during at least one operating condition of the machine 1.

In particular, the protective body 3 has an inner surface 4, at least partially facing the work area "A", and an outer surface 5, at least partially facing an environment outside the machine 1.

Advantageously, the machine 1 further comprises at least one optical acquisition device 6 configured to acquire at least one image representative of the work area "A".

Preferably, the at least one optical acquisition device 6 comprises at least one lens of wide-angle type ensuring an acquisition of the at least one image with particular effectiveness.

In accordance with a possible embodiment of the present invention and as illustrated in the appended figures, the machine 1 may comprise adjusting means 7 that are active or activatable on the at least one optical acquisition device 6.

In particular, the adjusting means 7 can be configured to regulate positioning of the at least one optical acquisition device 6 at least with respect to the work area "A".

Preferably, the adjusting means 7 comprise a system of movement guides and/or an anthropomorphic robot configured to constrain the at least one optical acquisition device 6 and to move it into a plurality of operating positions.

In this way, the adjusting means 7 guarantee a high operating flexibility to the machine 1.

Advantageously, the machine 1 further comprises at least one display screen 8 operationally connected to the at least one optical acquisition device 6 to display the at least one image.

Preferably, the display screen 8 is connected to the outer surface 5 of the protective body 3 so as to make visible to a user the at least one image during at least one operating condition of the machine 1.

Preferably, the optical acquisition device 6 and the at least one display screen 8 are configured to provide a real-time display of the at least one image.

In essence, the optical acquisition device 6 can take a shot of the work area "A" and the at least one display screen 8 can show in real time and/or in a delayed time what has been taken by the optical acquisition device 6.

In this way, the display screen 8 allows an operator to monitor the operation of the machine 1 during the different operating steps, safeguarding his safety thanks to a complete isolation from the work area "A".

In other words, the display screen 8 protects the operator from the presence of radiations and/or laser beams used for processing operations by the machine 1.

According to a possible embodiment of the present invention, the at least one acquisition device 6 and the at least one display device 8 can be interconnected by means of a wireless type connection.

According to further possible embodiments of the present invention, the at least one acquisition device 6 and the at least one display device 8 can be interconnected by means of a wired connection without altering the inventive concept underlying the present invention.

In accordance with a possible embodiment and as illustrated in the appended figures, the protective body 3 may comprise a through window 9 which generally allows a direct visualization of the work area "A".

In particular, in this discussion, the term "direct visualization" refers to observing the work area "A" directly and, therefore, without the aid of screens or electronic display devices.

Advantageously, the display screen 8 can be arranged at the through window 9 so as to occlude it at least partially, preferably completely, in order to replace the direct visualization with a visualization by screen. Preferably, the through window 9 defines a housing in which there is no transparent surface/panel, preferably a glass or plexiglass or other, to provide said direct view of the work area A. Preferably, the housing of the through window 9 houses only said display screen 8 in replacement of a transparent surface/panel that is not installed.

In particular, the acquisition device 6 can be mounted directly on the rear face of the display screen 8.

Further, the adjusting means 7 are preferably arranged on the rear face of the display screen 8.

In other words, the display screen 8, the acquisition device 6 and the adjusting means 7 are operationally connected so as to be able to guarantee a high accuracy of the field of view framed by the optical acquisition device 6 and shown to the user through the display screen 8. According to further possible embodiments, the through window 9 may not be present, moreover, the display screen 8 and the acquisition device 6, together with the adjusting means 7, may be connected respectively to the outer surface 5 and to the inner surface 4 of the protective body 3, preferably opposite each other with respect to the protective body 3, without altering the inventive concept underlying the present invention.

In other words, the at least one optical acquisition device 6 may be connected to the inner surface 4 of the protective body 3 and/or the at least one optical acquisition device 6 and the at least one display screen 8 may be arranged opposite the protective body 3.

Furthermore, the machine 1 may comprise a graphic processing unit (not illustrated in the appended figures) operationally connected to the at least one optical acquisition device 6 and to the at least one display screen 8.

In particular, the graphic processing unit may be configured to process the at least one image so as to adapt it to the at least one display screen 8 and/or to reduce the optical distortion thereof.

In this way, thanks to the joint action of the at least one display screen 8, of the at least one acquisition device 6 and of the adjusting means 7, the graphic processing unit can give the operator the sensation of displaying the work area "A" directly with his eyes and without the interposition of the at least one display screen 8.

Furthermore, the machine 1 may comprise a storage unit (not illustrated in the appended figures) operationally connected to the at least one display screen 8 and/or to the at least one acquisition device 6 to save the at least one image acquired by the at least one acquisition device 6 and/or to make such at least one image available to the at least one display screen 8, for example, for a display subsequent to or simultaneous with acquisition. Advantageously, the machine 1 may comprise a user interface module configured to allow at least one operator to insert and/or modify at least one operating parameter.

For example, the user interface module may make available to an operator one or more operating parameters relating to one or more processing operations of the machine 1.

Furthermore, the graphical interface can allow, for example, to actuate the adjusting means 7.

In accordance with a possible embodiment of the present invention, the at least one display screen 8 may at least partially define the user interface module.

For example, the at least one display screen 8 may comprise at least one touchscreen type monitor adapted to allow the insertion of one or more operating parameters by an operator.

In accordance with a further aspect the present invention refers to a safety device for a guard for protecting a machine for processing and/or scanning an object comprising at least one optical acquisition device 6 and at least one display screen 8 in accordance with what has been previously described.

Advantageously, the device comprises support means configured to connect at least the at least one display screen 8 to the guard for protecting the machine so as to cover an opening thereof, for example the aforementioned through window 9, adapted to allow an optical inspection by a user.

In particular, the display screen 8 is connected or connectable to the support means so as to make visible to an operator the at least one image during at least one operating condition of the machine.

In other words, the support means together with the at least one display screen 8 allow to at least partially occlude the opening of the guard protecting the operator and at the same time guaranteeing him the complete view on the work area "A".

In this way, the present invention makes it possible to update the guard for protecting a machine for processing and/or scanning in accordance with the prior art, for example thanks to the replacement of the transparent element applied to the opening of the guard with the safety device.

In other words, the device may be retrofitted to a machine for processing and/or scanning in accordance with the prior art.

Advantageously, the at least one display screen 8 and/or the support means can be configured to at least partially isolate the work area "A" from an environment outside the machine increasing safety for the operator during a plurality of operating steps of the machine.

In accordance with a possible embodiment and as illustrated in the appended figures, the at least one optical acquisition device 6 can be connected to the support means. In particular, the at least one optical acquisition device 6 and the at least one display screen 8 can be arranged opposite the support means such that the at least one optical acquisition device 6 faces the work area "A" and that the at least one display screen 8 faces outside the machine in order to be viewed by an operator. Advantageously, the safety device can comprise the aforementioned adjusting means 7 that are active or activatable on the at least one optical acquisition device 6 and configured to regulate positioning at least with respect to the work area "A".

Preferably, the adjusting means 7 are connected to the aforementioned support means giving the safety device particular compactness. Furthermore, the safety device may comprise a user interface module configured to allow at least one operator to insert and/or modify at least one operating parameter in accordance with what has been previously described.

In accordance with a further aspect the present invention refers to a method for viewing a work area in a machine for processing and/or laser scanning an object comprising the step of providing a guard, for example for protecting the protective body 3, of the machine so as to cover an opening thereof adapted to allow an optical inspection by a user.

In particular, the protective guard can have a through window 9 for viewing an inner work area "A".

Furthermore, the method may comprise a step of installing at least one display screen 8 facing outwards at the window and for partially covering the same.

Furthermore, the method may comprise a step of installing at least one optical acquisition device 6 configured to acquire at least one image representative of a work area of the machine and to transmit it to the graphic display screen.

It can therefore be noted that the present invention achieves the proposed purposes by realizing a machine for laser processing an object and a safety device for a guard for protecting a machine for processing and/or scanning an object capable of guaranteeing high safety for operators thanks to the presence of at least one optical acquisition device and at least one display screen that are operationally connected to allow an operator to view at least one image representative of the work area of the machine.

Advantageously, the present invention increases the visibility for the operator with respect to the devices of the prior art thanks to the possibility of moving the optical acquisition device with respect to the work area. Furthermore, the present invention gives the operator the sensation of viewing the work area "A" directly with his eyes and without the interposition of the at least one display screen making its use easy and intuitive.

## Claims

1. A machine (1) for laser processing an object comprising:
- a processing unit (2) defining a work area (A) adapted to house at least partially an object during a laser processing;
- a protective body (3) connected to said processing unit (2) and configured to protect a user during at least one operating condition of said machine (1), said protective body (3) having an inner surface (4), at least partially facing said work area (A), and an outer surface (5), at least partially facing an environment outside said machine (1);
- at least one optical acquisition device (6) configured to acquire at least one image representative of said work area (A);
- at least one display screen (8) operationally connected to said at least one optical acquisition device (6) to display said at least one image;
wherein said display screen (8) is connected to the outer surface (5) of said protective body (3) so as to make visible to a user said at least one image during at least one operating condition of said machine (1);
**characterized in that** said protective body (3) comprises a through window (9); said display screen (8) being arranged at said through window (9) so as to occlude it completely in order to replace a direct visualization of the work area (A) with a visualization by said display screen (8).

2. The machine according to claim 1, wherein said acquisition device is fitted directly to the rear face of the display screen (8).

3. The machine according to one or more of the preceding claims, wherein said at least one optical acquisition device (6) is connected to said inner surface (4) of said protective body (3); and wherein said at least one optical acquisition device (6) and said at least one display screen (8) are arranged opposite said protective body (3).

4. The machine according to one or more of the preceding claims, wherein said at least one optical acquisition device (6) comprises at least one lens of wide-angle type.

5. The machine according to one or more of the preceding claims, comprising a graphic processing unit operationally connected to said at least one optical acquisition device (6) and to said at least one display screen (8), said graphic processing unit being configured to process said at least one image so as to adapt the image to said at least one display screen (8) and/or reduce the optical distortion thereof.

6. The machine according to one or more of the preceding claims, wherein said optical acquisition device (6) and said at least one display screen (8) are configured to provide a real-time display of said at least one image.

7. The machine according to one or more of the preceding claims, comprising adjusting means (7) that are active or activatable on said at least one optical acquisition device (6) and configured to regulate positioning of said at least one optical acquisition device (6) at least with respect to said work area (A).

8. The machine according to claim 7, wherein said adjusting means (7) comprise a system of movement guides and/or an anthropomorphic robot configured to constrain said at least one optical acquisition device (6) and to move it into a plurality of operating positions.

9. The machine according to one or more of the preceding claims, comprising a user interface module configured to allow at least one operator to insert and/or modify at least one operating parameter.

10. The machine according to one or more of the preceding claims, wherein said through window (9) defining a housing in which there is no transparent surface, preferably a glass, to provide said direct view of the work area (A), said housing of the through window (9) housing only said display screen (8).

11. A safety device for a guard for protecting a machine for processing and/or scanning an object comprising:
- at least one optical acquisition device (6) configured to acquire at least one image representative of a work area (A) of the machine;
- at least one display screen (8) operationally connected to said at least one optical acquisition device (6) to display said at least one image;
- support means configured to connect at least said at least one display screen (8) to the guard for protecting the machine so as to cover an opening thereof that is adapted to permit an optical inspection by a user;
wherein said support means together with said at least one display screen (8) are configured to completely occlude the opening of the guard so as to protect the operator and at the same time guarantee him a full view of the work area "A";
wherein said display screen (8) is connected or connectable to said support means so as to make visible to a user said at least one image during at least one operating condition of the machine.

12. The device according to claim 11, wherein said at least one display screen (8) and/or said support means is configured to isolate at least partially said work area (A) from an environment outside the machine.

13. The device according to claim 11 or 12, wherein said at least one optical acquisition device (6) is connected to said support means; and wherein said at least one optical acquisition device (6) and said at least one display screen (8) are arranged opposite said support means.

14. The device according to one of claims 11-13, comprising an adjusting means (7) that is active or activatable on said at least one optical acquisition device (6) and configured to regulate positioning of said at least one optical acquisition device (6) at least with respect to said work area (A).

15. A method for viewing a work area (A) in a machine for processing and/or laser scanning an object comprising the following steps:
- setting up a guard for protecting the machine so as to cover an opening thereof adapted to permit an optical inspection by a user; said protective guard having a through window (9) for viewing an inner work area (A);
- installing at the window and to cover the window at least one display screen (8) facing outwards;
said display screen (8) being arranged at said through window (9) so as to completely occlude it in order to replace a direct visualization of the work area (A) with a visualization through said display screen (8);
- installing at least one optical acquisition device (6) configured to acquire at least one image representative of a work area (A) of the machine and to transmit the image to the graphic display screen (8).
